Europäisches Patentamt

European Patent Office

Office européen des brevets

(11) Veröffentlichungsnummer: **0 353 528 B1**

# EUROPÄISCHE PATENTSCHRIFT

(45) Veröffentlichungstag der Patentschrift:
02.01.92 Patentblatt 92/01

(51) Int. Cl.⁵ : **F24H 8/00**

(21) Anmeldenummer: **89113043.7**

(22) Anmeldetag : **15.07.89**

(54) **Kondensat-Ableit- und Neutralisationsvorrichtung für einen mit niedriger Abgastemperatur betriebenen Kamin.**

(30) Priorität : **25.07.88 DE 8809519 U**

(43) Veröffentlichungstag der Anmeldung :
**07.02.90 Patentblatt 90/06**

(45) Bekanntmachung des Hinweises auf die
Patenterteilung :
**02.01.92 Patentblatt 92/01**

(84) Benannte Vertragsstaaten :
**AT BE CH DE FR GB IT LI NL SE**

(56) Entgegenhaltungen :
**DE-A- 3 243 988**
**DE-A- 3 427 036**

(73) Patentinhaber : **Schott-Rohrglas GmbH**
**Theodor-Schmidt-Strasse 25**
**W-8580 Bayreuth (DE)**

(72) Erfinder : **Reuter, Walter, Dipl.-Ing.**
**Fritz-Seebach-Strasse 28**
**W-8596 Mitterteich (DE)**
Erfinder : **Männl, Reinhard, Dipl.-Ing.**
**Kohllohstrasse 29**
**W-8596 Mitterteich (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

## Beschreibung

Die Erfindung betrifft eine Kondensat-Ableit- und Neutralisationsvorrichtung für einen mit niedriger Abgastemperatur betriebenen Kamin einer mit Heizöl oder Erdgas betriebenen Verbrennungsanlage.

Bei modernen Heizungsanlagen wird vorzugsweise mit niedriger Abgastemperatur gearbeitet. Neben anderen Vorteilen ergibt sich dadurch der Vorteil, daß saure Bestandteile des Abgases nicht in die Luft abgegeben werden, sondern als Kondensat anfallen. Die Behandlung und Ableitung derartigen Kondensats erfordert einen gewissen Aufwand für Einbauten und Wartung.

Die DE-A-3243988 offenbart beispielsweise die Kondensatabführung über eine zwischengeschaltete Filtereinrichtung, die mit einem Neutralisationsmittel enthaltenden Gefäß versehen ist, wobei zumindest das Neutralisationsmittel austauschbar ist. Das Gefäß ist zweckmäßig als Austauschgefäß ausgebildet und umfaßt ein Volumen für eine Neutralisationsmittel-Menge, die mindestens für eine Heizperiode ausreicht. Mit einer solchen Filtereinrichtung läßt sich das Kondensat zwar prinzipiell neutralisieren, doch die im Kondensat zusätzlich enthaltenen Schwebstoffe können zu einer frühzeitigen Erschöpfung des Neutralisationsmaterials führen und verursachen dadurch z.B. häufigere Wartungsintervalle der Anlage, höhere Unterhaltskosten und führen zu einer insgesamt weniger zuverlässigen Funktionsweise der Kondensat-Ableit-Neutralisationsvorrichtung. Große Schwierigkeiten werden also durch die komplexe Zusammensetzung des Abgases verursacht.

Die Erfindung geht von der Aufgabe aus, eine Kondensat-Ableitvorrichtung für einen mit niedriger Abgastemperatur betriebenen Kamin zu schaffen, die bei zuverlässiger Funktion nur einen geringen Aufwand für Installation und Wartung erfordert.

Nach der Erfindung wird diese Aufgabe gelöst mit einer Kondensat-Ableitvorrichtung nach dem Anspruch 1.

Bei der erfindungsgemäßen Vorrichtung wird eine störende Beladung des Neutralisationsmaterials mit Schwebstoffen wie Öl, Ruß und Ascheteilchen verhindert, so daß ein vorzeitiges Unwirksamwerden des Neutralisationsmaterials verhindert wird. Durch die lösbare Anordnung des Schwebstoffilters in der Neutralisationspatrone ergibt sich ein sehr einfacher Aufbau, bei dem Ausbau und Austausch des Schwebstoffilters und/oder des Neutralisationsmaterials leicht durchführbar sind. Außerdem kann beim Auswechseln des Schwebstoffilters die Oberfläche des Neutralisationsmaterials inspiziert werden.

Das Schwebstoffilter kann verhältnismäßig klein ausgeführt sein, weil es nur Bestandteile aufnehmen muß, die in dem Abgas in verhältnismäßig geringen Mengen vorkommen. Zweckmäßigerweise legt man den Schwebstoffilter so aus, daß seine Stammzeit den üblichen Schornstein-Wartungsintervallen entspricht ; dadurch kann sehr leicht eine sachgerechte Entsorgung sichergestellt werden. Da das Neutralisationsmaterial durch das vorgeschaltete Schwebstoffilter vor gefährlichen und gesundheitsschädlichen Substanzen geschützt ist, bildet das verbrauchte Neutralisationsmaterial einen ungefährlichen Abfall, der nicht wie Sondermüll behandelt werden muß.

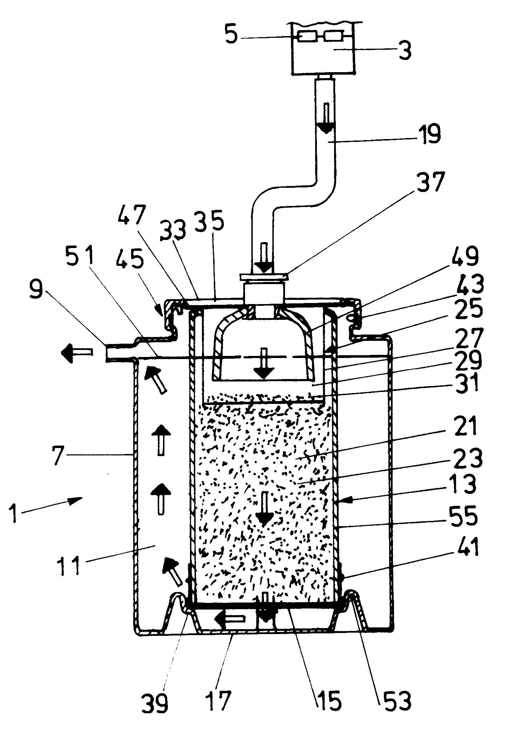

Die Erfindung wird im folgenden anhand eines Ausführungsbeispiels in Verbindung mit der Zeichnung näher beschrieben.

Die Figur ist eine schematische Vertikalschnitt-Darstellung einer Ausführungsform einer erfindungsgemäßen Kondensat-Ableitvorrichtung.

Die dargestellte Kondensat-Ableitvorrichtung 1 dient zur Ableitung von saurem Kondensat aus einem Kamin 3 einer Verbrennungsanlage 5, die mit verhältnismäßig niedriger Abgastemperatur betrieben wird. Es kann sich dabei insbesondere um eine Haushalts-, Gas- oder Ölheizung handeln.

Die Vorrichtung 1 enthält einen Überlaufbehälter 7, der vorzugsweise transparent ist und z.B. aus Kunststoff bestehen kann. Der Überlaufbehälter 7 weist. in seinem oberen Bereich einen Überlauf 9 für behandeltes Kondensat auf und bildet unterhalb des Überlaufes 9 einen Flüssigkeitsraum 11. In den Flüssigkeitsraum 11 taucht von oben eine Neutralisationspatrone 13 ein. Diese hat ein unteres Ende, das mit einer flüssigkeitsdurchlässigen Wand 15 verschlossen und mit Abstand von einem Boden 17 des Überlaufbehälters 7 gehalten ist. Die Neutralisationspatrone 13 hat ferner ein oberes Ende, das mit einer Kondensat-Zuleitung 19 verbindbar ist. Zwischen den Enden bildet die Neutralisationspatrone 13 einen Aufnahmeraum 21 für ein sich im Betrieb verbrauchendes auswechselbares Neutralisationsmaterial 23.

Die Neutralisationspatrone 13 besteht vorzugsweise aus Borosilikatglas und vereinigt dadurch hohe Festigkeit, chemische Beständigkeit und Transparenz mit niedrigen Herstellungskosten.

Zwischen der Kondensat-Zuleitung 19, die beispielsweise aus flexiblem säurefestem Kunststoffschlauch besteht und dicht an ein unteres Ende des Kamins 3 angeschlossen ist, und dem Aufnahmeraum 21 der Neutralisationspatrone 13 ist ein Schwebstoffilter 25 in einem oberen Abschnitt der Neutralisationspatrone 13 auswechselbar angeordnet.

Bei der dargestellten Ausführungsform weist das Schwebstoffilter 25 ein Gehäuse 27 auf, das einen Aufnahmeraum 29 für ein Schwebstoffiltermaterial 31 bildet, an seinem oberen Ende einen auf den offenen oberen Rand der Neutralisationspatrone 13 übergreifenden oberen Rand 33 aufweist und mit einem Deckel 35 verschließbar ist. Der Deckel 35 weist einen Zulaufanschluß 37 für die Kondensat-Zuleitung 19 auf.

Die flüssigkeitsdurchlässige Wand 15 am unteren Ende der Neutralisationspatrone 13 kann beispielsweise aus einem säurefesten porösen Filtertuch, porösem Kunststoff oder porösem Glas bestehen. Bei der dargestellten Ausführungsform wird ein säurefestes Filtertuch verwendet, das um einen vorspringenden unteren Rand 39 der Neutralisationspatrone 13 herumgelegt und mit Befestigungsmitteln 41, z.B. einem O-Ring oder Gummiband abgedichtet lösbar befestigt ist. Diese Ausführungsform ist besonders einfach.

Durch den beschriebenen Aufbau kann das Schwebstoffilter 25 sehr einfach ausgetauscht werden : Man braucht nur nach dem Abnehmen des Deckels 35 das Gehäuse 27 aus dem oberen Teil der Neutralisationspatrone 13 herauszunehmen und durch ein neues Schwebstoffilter zu ersetzen ; danach muß nur der Deckel 35 wieder aufgesetzt werden. Das Schwebstoffilter ist wegen seiner geringen Größe und seiner geringen Herstellungskosten vorzugsweise als Wegwerfteil gedacht und kann in der üblichen Weise als Sondermüll entsorgt werden. Es ist aber natürlich auch möglich, das herausgenommene Schwebstoffilter 25 zu entleeren und neues Schwebstoffilter material 31 einzufüllen. Dies ist jedoch wegen der damit verbundenen möglichen unsachgemäßen Handhabung weniger ratsam.

Vorzugsweise ist, wie dargestellt, der Deckel 35 an einem oberen Randabschnitt 43 des Überlaufbehälters 7 leicht lösbar befestigt und dadurch auf den oberen Rand des Schwebstoffilters 25 aufgesetzt. Es sind dann sowohl für den Austausch des Schwebstoffilters 25 als auch für das Regenerieren der Neutralisationspatrone 13 keine anderen Vorbereitungen erforderlich als das Abnehmen und Wiederaufsetzen des Deckels 33.

Der Deckel 35 ist zweckmäßigerweise wie dargestellt in einer Schnellverbindung 45 an dem oberen Randabschnitt 43 des Überlaufbehälters 7 befestigbar. Diese Schnellverbindung kann z.B. als Schraub- oder vorzugsweise als Schnappverbindung ausgebildet sein ; in beiden Fällen treten übereinandergreifende Umfangsränder des Deckels 35 und des oberen Randabschnitts 43 miteinander in Eingriff. Dadurch wird die Handhabung noch weiter vereinfacht.

Es versteht sich, daß erforderlichenfalls Dichtungsringe überall dort vorgesehen werden können, wo eine gute Abdichtung gewünscht wird.

Bei der dargestellten Ausführungsform weist die Neutralisationspatrone 13 einen radial nach innen abgebogenen oberen Rand 47 auf. Dieser erleichtert das Herausnehmen der Neutralisationspatrone 13 und bildet eine Zentrierung des Schwebstoffilters 25.

Bei der dargestellten Ausführungsform ist an dem Deckel 35 ein an den Zulauf-Anschluß 37 angeschlossener Tauchglocke 49 vorgesehen, dessen größeres Ende so weit unterhalb des betriebsmäßigen Überlaufniveaus 51 liegt, wie es dem in dem Kamin 3 herrschenden Überdruck (z.B. 10 mm WS) plus einem Sicherheitszuschlag (z.B. 40 mm WS) entspricht. Dies führt im Betrieb zu einem gasdichten Verschluß zwischen Kamin 3 und Zulauf 19 einerseits und dem Überlauf 9 in das Abwasser andererseits.

Die Tauchglocke 49 bietet den Vorteil, daß sie an ihrem oberen, engeren Ende leicht eine fehlerfreie Abdichtung gegen den Zulauf-Anschluß 37 und die Kondensat-Zuleitung 19 bilden kann, so daß es auf eine vollständige Dichtigkeit zwischen dem Deckel 35, dem Überlaufbehälter 7 und den oberen Rändern der Neutralisationspatrone 13 und des Schwebstoffilters 25 nicht ankommt.

Vorzugsweise ist wie dargestellt, das Schwebstoffiltermaterial 31 unterhalb des größeren, unteren Endes der Tauchglocke 49 angeordnet. Dadurch ergibt sich eine gleichmäßigere Beaufschlagung des Schwebstoffiltermaterials 31 mit dem aus der Tauchglocke 49 ankommenden Kondensat.

Die Tauchglocke 49 besteht Vorzugsweise aus Borosilikatglas. Dieses Material ist kostengünstig, beständig und transparent.

Vorzugsweise ist der Zulauf-Anschluß 37 leicht lösbar ausgeführt, damit erforderlichenfalls die Vorrichtung bequem zerlegt werden kann, beispielsweise für Reinigungszwecke. Dargestellt ist eine Ausführung als Verschraubung.

Bei der dargestellten Ausführungsform ist die Neutralisationspatrone 13 in eine in dem Überlaufbehälter 7 vorgesehene Halteeinrichtung 53 herausnehmbar eingesetzt, so daß sie leicht und ohne Zuhilfenahme von Werkzeug aus- und eingebaut werden kann. Bei der dargestellten Ausführungsform besteht die Halteeinrichtung 53 aus in den Boden 17 des Überlaufbehälters 7 eingeformten Stufen. Das ist leicht herstellbar, insbesondere bei Überlaufbehältern aus Kunststoff. Bei einer anderen Ausführungsform besteht die Haltevorrichtung 53 aus eingelegten Kunststoffteilen.

Der Aufnahmeraum 21 der Neutralisationspatrone 13 ist mit einem Gemisch aus dem Neutralisationsmaterial 23, zum Beispiel M6K II-Granulat der Firma Cillichemie, und einem inerten Auflockerungsmaterial 55 gefüllt.

Dadurch kann ein Zusammenbacken des aus dem Neutralisationsmaterial und dem Kondensat entstehenden Reaktionsprodukts vermieden werden. Besonders vorteilhaft ist es, wenn das Neutralisationsmaterial 23 aus $CaCO_3$ besteht. Dann ergeben sich als Reaktionsprodukte unschädliche Kalziumsalze, z.B. $CaSO_4$, und daß bei der Reaktion entstehende Kohlendioxyd wirkt auflockernd. Es empfiehlt sich dann, im oberen Bereich der Neutralisationspatrone 13 einen ausreichenden Gasauslaßpfad zum Überlauf 9 vorzusehen, z.B. in Form einer gewollten Undichtigkeit zwischen dem Deckel 35 und den oberen Rändern der Neutralisationspatrone 13 und des Schwebstofffilter-Gehäuses 27. Als Auflockerungsmaterial werden vorzugsweise Glasrohrbruchstücke verwendet, insbesondere solche aus Borosilikatglas. Es genügt dann ein Anteil von etwa 10 Gew.-% Auflockerungsmaterial. Beispielhaft sei hier genannt : Rohrbruchstücke, Innendurchmesser I = 5-10 mm, Wanddicke WD = 0,5-1,0 mm, Länge L = 5-10 mm.

Die dargestellte Vorrichtung arbeitet nach dem Syphonprinzip ohne Pumpen und mechanisch bewegte Teile, nur unter dem Einfluß der Schwerkraft. Bei Inbetriebnahme kann Wasser bis zum Überlauf 9 eingefüllt werden. Im Betrieb wird das zulaufende Kondensat in zwei Stufen behandelt. Zunächst werden in dem Schwebstoffilter 25 gefährliche und störende Schwebstoffe wie Öltröpfchen, Rußpartikel Ascheteilchen und dergleichen zurückgehalten. Je nach dem verwendeten Schwebstoffiltermaterial 31 können auch stark giftige Bestandteile des Rauchgases, die nur in geringen Mengen vorliegen, zum Beispiel cancerogene mehrkernige Kohlenwasserstoffe in dem Schwebstoffilter 25 zurückgehalten werden.

Das in dieser Weise vorgereinigte Kondensat fließt langsam durch das Neutralisationsmaterial 23 und dann nach Neutralisation durch den Überlauf 9 ab.

Vorzugsweise ist die Vorrichtung für eine Standzeit des Neutralisationsmaterials von mehreren Monaten, z.B. etwa 12 Monaten, ausgelegt.

Das ist bei den z.B. in üblichen Privathaus-Heizungsanlagen anfallenden Kondensatmengen mit handlichen Abmessungen möglich. Dabei sind sowohl die Anschaffungs- als auch die Betriebs- und Wartungskosten nur mäßig.

## Patentansprüche

1. Kondensat-Ableitvorrichtung (1) für einen mit niedriger Abgastemperatur betriebenen Kamin (3) einer Verbrennungsanlage (5), mit einer Neutralisationspatrone (13) für das zu behandelnde Kondensat, die ein unteres Ende und ein mit einer Kondensat-Zuleitung verbindbares offenes oberes Ende aufweist, wobei zwischen den Enden ein Aufnahmeraum (21) für ein sich im Betrieb verbrauchendes auswechselbares Neutralisationsmaterial (23) ausgebildet ist, dadurch gekennzeichnet, daß
— die Neutralisationspatrone (13) in einen vorzugsweise transparenten Überlaufbehälter (7) eintaucht, der in einem oberen Bereich einen Überlauf (9) für behandeltes Kondensat aufweist und unterhalb des Überlaufs (9) einen Flüssigkeitsraum (11) bildet,
— die Neutralisationspatrone (13) an ihrem unteren Ende eine flüssigkeitsdurchlässsige Wand (15) aufweist und mit Abstand von einem Boden (17) des Überlaufbehälters (7) gehalten ist und
— zwischen der Kondensatzuleitung (19) und dem Aufnahmeraum (21) im oberen Abschnitt der Neutralisationspatrone (13) ein Schwebstoffilter (25) auswechselbar angeordnet ist.

2. Vorrichtung nach Anspruch 1, dadurch gekennzeichnet, daß das Schwebstoffilter (25) ein Gehäuse (27) aufweist, das einen Aufnahmeraum (29) für ein Schwebstoffiltermaterial (31) bildet, an seinem oberen Ende einen auf den oberen offenen Rand der Neutralisationspatrone (13) übergreifenden oberen Rand aufweist und mit einem abnehmbaren Deckel (35) verschließbar ist, der einen Zulauf-Anschluß (37) für die Kondensat-Zuleitung (19) aufweist.

3. Vorrichtung nach Anspruch 1 oder 2, dadurch gekennzeichnet, daß der Deckel (35) an einem oberen Randabschnitt (43) des Überlaufbehälters (7) in einer Schnellverbindung leicht lösbar befestigbar und dadurch auf den oberen Rand des Schwebstoffilter-Gehäuses (27)aufsetzbar ist.

4. Vorrichtung nach Anspruch 3, dadurch gekennzeichnet, daß die Schnellverbindung eine Schnappverbindung oder eine Schraubverbindung ist.

5. Vorrichtung nach einem der Ansprüche 2 bis 4, dadurch gekennzeichnet, daß die Neutralisationspatrone (13) einen radial nach innen abgebogenen oberen Rand (47) aufweist.

6. Vorrichtung nach einem der Ansprüche 2 bis 5, dadurch gekennzeichnet, daß an dem Deckel (35) eine abgedichtet an den Zulauf-Anschluß (37) angeschlossene Tauchglocke (49) aus Glas vorgesehen ist, die ein in dem Schwebstoffilter (25) unterhalb des betriebsmäßigen Flüssigkeitsniveaus (51) liegendes größeres unteres Ende aufweist.

7. Vorrichtung nach Anspruch 6, dadurch gekennzeichnet, daß das Schwebstoffmaterial (31) unterhalb des größeren Endes der Tauchglocke (49) angeordnet ist.

8. Vorrichtung nach einem der Ansprüche 6 oder 7, dadurch gekennzeichnet, daß der Zulauf-Anschluß (37) leicht lösbar ausgeführt, und die Tauchglocke (49) in ihrem kleineren Ende an dem Zulauf-Anschluß (37) lösbar befestigt ist.

9. Vorrichtung nach einem der vorhergehenden Ansprüche, dadurch gekennzeichnet, daß die Neutralisationspatrone (13) aus Glas besteht und in eine in dem Überlaufbehälter (7) vorgesehene Haltereinrichtung (53) herausnehmbar eingesetzt ist.

10. Vorrichtung nach einem der vorhergehenden Ansprüche, dadurch gekennzeichnet, daß der Aufnahmeraum (21) der Neutralisationspatrone (13) mit einem Gemisch aus einem Neutralisationsmaterial (23) und einem inerten Auflockerungsmaterial (55) gefüllt ist.

11. Vorrichtung nach einem der vorhergehenden Ansprüche, dadurch gekennzeichnet, daß die Neutralisationspatrone (13) und das Schwebstoffilter (25) für eine Standzeit ausgelegt sind, die einem normalen Wartungsintervall des Kamins (3) entspricht.

## Claims

1. Apparatus (1) for drawing off condensate for a chimney (3) of a combustion unit (5) operating at low flue gas temperature, having a neutralization cartridge (13) for the condensate to be treated, this neutralization cartridge (13) having a lower end and an open upper end which may be connected to a condensate supply line, a receiving chamber (21) for an exchangeable neutralization material (23) which is consumed in operation being constructed between the ends, characterized in that
— the neutralization cartridge (13) penetrates into a preferably transparent overflow container (7) which has an overflow (9) for treated condensate in an upper region and forms a liquid chamber (11) below the overflow (9),
— the neutralization cartridge (13) has a liquid-permeable wall (15) at its lower end and is held at a spacing from a base (17) of the overflow container (7), and
— there is exchangeably arranged between the condensate supply line (19) and the receiving chamber (21) in the upper section of the neutralization cartridge (13) a suspended matter filter (25).

2. Apparatus according to Claim 1, characterized in that the suspended matter filter (25) has a housing (27) which forms a receiving chamber (29) for a suspended matter filter material (31), has at its upper end an upper edge reaching over the upper open edge of the neutralization cartridge (13) and may be closed by means of a removable cover (35) which has an inlet connection piece (37) for the condensate supply line (19).

3. Apparatus according to Claim 1 or 2, characterized in that the cover (35), at an upper edge section (43) of the overflow container (7), may be easily releasably fixed in a quick-acting connection and as a result may be placed on the upper edge of the suspended matter filter housing (27).

4. Apparatus according to Claim 3, characterized in that the quick-acting connection is a snap-on connection or a screw connection.

5. Apparatus according to one of Claims 2 to 4, characterized in that the neutralization cartridge (13) has a radially inwardly bent-off upper edge (47).

6. Apparatus according to one of Claims 2 to 5, characterized in that there is provided on the cover (35) a submersible bell (49) made of glass and attached to the inlet connection piece (37) in sealed-off manner, which submersible bell (49) has a larger lower end lying in the suspended matter filter (25) below the operative liquid level (51).

7. Apparatus according to Claim 6, characterized in that the suspended matter material (31) is arranged below the larger end of the submersible bell (49).

8. Apparatus according to one of Claims 6 or 7, characterized in that the inlet connection piece (37) is designed to be easily releasable, and the submersible bell (49) in its smaller end is releasably secured to the inlet connection piece (37).

9. Apparatus according to one of the preceding claims, characterized in that the neutralization cartridge (13) comprises glass and is extractably inserted in a holding device (53) provided in the overflow container (7).

10. Apparatus according to one of the preceding claims, characterized in that the receiving chamber (21) of the neutralization cartridge (13) is filled with a mixture of a neutralization material (23) and an inert loosening material (55).

11. Apparatus according to one of the preceding claims, characterized in that the neutralization cartridge (13) and the suspended matter filter (25) are designed to have a useful life which corresponds to a normal maintenance interval of the chimney (3).

## Revendications

1. Dispositif d'évacuation des condensats (1) pour une cheminée (3) fonctionnant à basse température d'une installation de combustion (5), comportant une cartouche de neutralisation (13) pour le condensat à traiter, qui présente une extrémité inférieure et une extrémité supérieure ouverte pouvant être reliée à une conduite d'amenée de condensats, une chambre réceptrice (21) pour un produit de neutralisation (23) remplaçable, qui s'use en fonctionnement, étant aménagée entre les extrémités, caractérisé en ce que
— la cartouche de neutralisation (13) pénètre dans une cuve à trop-plein (7), de préférence transparente, qui comporte, dans une partie supérieure, un tube de trop-plein (9) pour les condensats traités, et forme au-dessous du trop-plein (9) une chambre (11) pour le liquide.
— la cartouche de neutralisation (13) présente à sa partie inférieure une paroi (15) perméable au liquide et est maintenue à distance d'un fond (17) de la cuve à trop plein (7).
— un filtre pour matières en suspension (25) est monté avec possibilité de remplacement dans la partie supérieure de la cartouche de neutralisation (13) entre la conduite d'amenée de condensats (19) et la chambre réceptrice (21).

2. Dispositif selon la revendication 1, caractérisé en ce que le filtre pour matières en suspension (25) comporte un boîtier (27) qui forme une chambre réceptrice (29) pour un matériau filtrant pour matières en suspension (31), présente à son extrémité supérieure un bord supérieur s'engageant sur le bord supérieur ouvert de la cartouche de neutralisation (13) et qui peut être fermé au moyen d'un couvercle (35) amovible, qui comporte un raccord d'entrée (37) pour la conduite d'amenée de condensats (19).

3. Dispositif selon la revendication 1 ou 2, caractérisé en ce que le couvercle (35) est fixé de manière facilement démontable par une fixation rapide sur un rebord (43) supérieur de la cuve à trop-plein (7) et peut ainsi être monté sur le bord supérieur du boîtier (27) du filtre pour matières en suspension.

4. Dispositif selon la revendication 3, caractérisé en ce que la fixation rapide est une fixation par encliquetage ou une fixation à vis.

5. Dispositif selon l'une des revendications 2 à 4, caractérisé en ce que la cartouche de neutralisation (13) présente un bord supérieur (47) recourbé radialement vers l'intérieur.

6. Dispositif selon l'une des revendications 2 à 5, caractérisé en ce qu'il est prévu sur le couvercle (35) une cloche à immersion (49) en verre raccordée de manière étanche au raccord d'entrée (37), qui présente une extrémité inférieure élargie située dans le filtre pour matières en suspension (25) au-dessous du niveau de liquide (51) en fonctionnement.

7. Dispositif selon la revendication 6, caractérisé en ce que le matériau filtrant pour matières en suspension (31) est placé au-dessous de l'extrémité élargie de la cloche à immersion (49).

8. Dispositif selon l'une des revendications 6 ou 7, caractérisé en ce que le raccord d'entrée (37) est réalisé de manière à pouvoir être démonté facilement et la cloche à immersion (49) est fixée avec possibilité de démontage par son extrémité plus petite sur le raccord d'entrée (37).

9. Dispositif selon l'une des revendications précédentes, caractérisé en ce que la cartouche de neutralisation (13) est en verre et est montée avec possibilité de démontage dans un dispositif support (53) prévu à l'intérieur de la cuve à trop-plein (7).

10. Dispositif selon l'une des revendications précédentes, caractérisé en ce que la chambre réceptrice (21) de la cartouche de neutralisation (13) est chargée d'un mélange de substance de neutralisation (23) et d'une substance de dispersion (55) inerte.

11. Dispositif selon l'une des revendications précédentes, caractérisé en ce que la cartouche de neutralisation (13) et le filtre pour matières en suspension (25) sont prévus pour une durée de vie correspondant à un intervalle d'entretien normal de la cheminée (3).